# EUROPÄISCHE PATENTSCHRIFT

(11) **EP 2 290 271 B1**
(45) Veröffentlichungstag und Bekanntmachung des Hinweises auf die Patenterteilung: **03.04.2019**
(21) Anmeldenummer: 09011034.7
(22) Anmeldetag: 28.08.2009
(51) Int. Cl.: F16J 15/3252, F16J 15/00

(54) **Dichtungsanordnung und deren Verwendung**
Seal assembly and its application
Agencement d'étanchéité et son utilisation

(43) Veröffentlichungstag der Anmeldung: 02.03.2011
(73) Patentinhaber: Carl Freudenberg KG, 69469 Weinheim (DE)
(72) Erfinder: Hofmann, Jens, 68305 Mannheim (DE); Begle, Stephan, 69469 Weinheim (DE)

(56) Entgegenhaltungen:
- EP-A- 1 026 428
- WO-A-03/031851
- DE-A1- 2 825 622
- DE-C- 867 189
- DE-C1- 3 619 309
- DE-U- 7 328 356
- GB-A- 534 408
- GB-A- 1 453 122
- JP-A- 2007 046 653
- US-A- 5 110 143
- US-A- 5 704 719
- US-A- 5 996 542

## Beschreibung

### Technisches Gebiet

Die Erfindung betrifft eine Dichtungsanordnung und deren Verwendung, wobei die Dichtungsanordnung ein abzudichtendes Maschinenelement, ein Gehäuse, das einen abzudichtenden Raum begrenzt, ein abzudichtendes Medium, einen Dichtring und einen Filterring aus Filtervlies umfasst, der dem Dichtring auf der dem abzudichtenden Raum zugewandten Seite mit axialem Abstand benachbart zugeordnet ist, wobei der Dichtring und der Filterring die abzudichtende Fläche des abzudichtenden Maschinenelements anliegend umschließen, wobei das abzudichtende Medium ein Schmiermittel ist und wobei der abzudichtende Raum zumindest teilweise mit dem Schmiermittel gefüllt ist.

### Stand der Technik

Eine solche Dichtungsanordnung ist aus der JP 2007 046653 A bekannt. Die Dichtungsanordnung umfasst einen als Radialwellendichtring ausgebildeten Dichtring und einen Filterring, wobei der Filterring dem Dichtring auf der dem abzudichtenden Raum zugewandten Seite mit axialem Abstand benachbart zugeordnet ist.

Eine weitere Dichtungsanordnung ist aus der DE 36 19 309 C1 bekannt.

Die Dichtungsanordnung umfasst ein abzudichtendes Maschinenelement, ein Gehäuse, das einen abzudichtenden Raum begrenzt, ein abzudichtendes Medium und eine Kühlwasserpumpendichtung für einen Verbrennungsmotor sowie einen Filterring aus Filtervlies. Der Filterring aus Filtervlies ist dem Dichtring auf der dem abzudichtenden Raum zugewandten Seite mit axialem Abstand benachbart zugeordnet, wobei der Dichtring und der Filterring die abzudichtende Fläche des abzudichtenden Maschinenelements anliegend umschließen. Der Filterring aus Filtervlies ist der Hauptdichtung kühlwasserseitig vorgeschaltet, wobei das Filtervlies an dem die Hauptdichtung tragenden Gehäuse befestigt ist. Das Filtervlies weist ein Flächengewicht von 60 bis 900g/m² und eine Dicke von 1 mm bis 4 mm auf und besteht bevorzugt aus Polyesterfasern. Das abzudichtende Medium ist Kühlwasser.

Eine weitere Dichtungsanordnung ist aus der GB 534 408 A bekannt.

Aus der DE 73 28 356 U ist eine Dichtungsanordnung bekannt, umfassend einen Dichtring und einen Filterring aus Filtervlies, wobei der Filterring auf der dem abzudichtenden Raum abgewandten Seite des Dichtrings angeordnet und diesem mit axialem Abstand benachbart zugeordnet ist.

Aus der EP-A 1 026 428 ist eine Dichtungsanordnung bekannt, mit einem Dichtring, dessen Dichtlippe entgegen dem abzudichtenden Raum in Richtung Umgebung vorgewölbt ist. Auf der Umgebungsseite der Dichtlippe ist ein Filterring aus einem Filtervlies angeordnet.

Entsprechende Dichtungsanordnungen sind außerdem aus der US-A 5,110,143; US-A 5,704,719; DE 867 189 C; US-A 5,996,542 und WO 03/031851 A bekannt. Jede dieser genannten Dichtungsanordnungen umfasst einen Dichtring und einen Filterring, wobei der Filterring auf der dem abzudichtenden Raum abgewandten Seite des Dichtrings angeordnet ist.

### Darstellung der Erfindung

Der Erfindung liegt die Aufgabe zugrunde, eine Dichtungsanordnung für andere abzudichtenden Medien als Kühlwasser zu entwickeln.

Eine reibungsbedingte unerwünscht große Wärmeentwicklung durch den Lauf des Filterrings auf der abzudichtenden Fläche soll vermieden werden.

Diese Aufgabe wird durch eine Dichtungsanordnung gemäß Anspruch 1 gelöst. Auf vorteilhafte Ausgestaltungen nehmen die Unteransprüche Bezug.

Außerdem soll die Dichtungsanordnung abweichend verwendet werden. Diese Aufgabe wird durch eine Verwendung gemäß Anspruch 7 gelöst.

Zur Lösung der Aufgabe ist eine Dichtungsanordnung vorgesehen, wie eingangs beschrieben, bei der der Filterring, bezogen auf die abzudichtende Fläche, eine Überdeckung ≤ 1 mm aufweist, wobei der Dichtring und der Filterring jeweils an einem Stützkörper festgelegt sind und mit den zugehörigen Stützkörpern jeweils eine vormontierbare Einheit bilden, wobei die vormontierbaren Einheiten mit axialem Abstand zueinander benachbart im Einbauraum angeordnet sind und wobei in dem Einbauraum axial zwischen den vormontierbaren Einheiten eine Zuleitung für das Frischöl angeordnet ist.

Der Dichtring und der Filterring sind jeweils an einem Stützkörper festgelegt und bilden mit den zugehörigen Stützkörpern jeweils eine vormontierbare Einheit. Hierbei ist von Vorteil, dass durch diese Modulbauweise unterschiedliche Dichtringe mit unterschiedlichen Filterringen kombinierbar sind. Die Stützkörper der jeweiligen Ringe bestehen bevorzugt aus einem zähharten Werkstoff, beispielsweise aus Blech oder einem polymeren Werkstoff. Die Gebrauchseigenschaften des Dichtrings und die Gebrauchseigenschaften des Filterrings können an den jeweiligen Anwendungsfall angepasst werden. Ist die Partikellast innerhalb des abzudichtenden Schmiermittels beispielsweise besonders groß und/oder der Werkstoff, aus dem der Dichtring besteht, besonders verschleißanfällig, kann ein Filterring aus einem Filtervlies vorgesehen sein, der eine besonders gute Filterwirkung aufweist. Soll demgegenüber der Dichtring besonders gut geschmiert werden und/oder das abzudichtende Schmiermittel weist eine nur sehr geringe Partikellast auf, kann das Filtervlies eine deutlich geringere Filterwirkung aufweisen und dadurch eine höhere Durchlässigkeit des abzudichtenden Schmiermittels zum Dichtring.

Die vormontierbaren Einheiten sind mit axialem Abstand zueinander benachbart im Einbauraum angeordnet. In dem Einbauraum axial zwischen den vormontierbaren Einheiten ist eine Zuleitung für Frischöl angeordnet. Das Frischöl wird nach seiner Einleitung in die Dichtungsanordnung in Richtung des abzudichtenden Raums, am vorgewölbten Filterring vorbei in den abzudichtenden Raum gefördert. Der Filterring fungiert dann als eine Art Rückschlagventil. Nachdem das Frischöl in den abzudichtenden Raum gelangt ist, legt sich der Filterring wieder an die abzudichtende Fläche an, um einen direkten und ungefilterten Durchtritt von verunreinigtem Schmiermittel aus dem abzudichtenden Raum zurück an den Dichtring zu verhindern.

Üblicherweise werden Dichtringe, die ein Schmiermittel abdichten, durch das abzudichtende Schmiermittel geschmiert, so dass sie während einer möglichst langen Gebrauchsdauer möglichst gleichbleibend gute Gebrauchseigenschaften aufweisen; der Verschleiß des Dichtringes soll durch die Schmierung auf ein Minimum reduziert werden.

Das setzt jedoch voraus, dass das abzudichtende Schmiermittel nach Möglichkeit keine Verunreinigungen, insbesondere keine abrasiv wirksamen Verunreinigungen, aufweist, die den Dichtring beschädigen könnten. Speziell bei der Verwendung von Dichtungsanordnungen in Getrieben oder Achsen von Kraftfahrzeugen ist eine Verunreinigung des abdichtenden Schmiermittels mit abrasiv wirksamen Partikeln jedoch nicht zu vermeiden, so dass der Dichtring der erfindungsgemäßen Dichtungsanordnung durch den in Richtung des abzudichtenden Raums axial vorgeschalteten Filterring aus Filtervlies vor einer Beaufschlagung mit diesen Verunreinigungen / Partikeln geschützt wird. Die Verunreinigungen werden durch den Filterring aus Filtervlies aufgenommen, und nur Schmiermittel, das frei von Verunreinigungen ist, gelangt durch den Filterring aus Filtervlies hindurch zu dem Dichtring, um diesen zu schmieren. Auch unter erschwerten Bedingungen, wie beispielsweise bei Verwendung der Dichtungsanordnung in einem Getriebe oder in einer Achse eines Kraftfahrzeugs, weist die Dichtungsanordnung gleichbleibend gute Gebrauchseigenschaften während einer langen Gebrauchsdauer auf, weil der Dichtring nur mit Schmiermittel beaufschlagt wird, aus dem die betriebsbedingt bei dieser Verwendung auftretenden Verunreinigungen herausgefiltert sind.

Der Dichtring und der Filterring umschließen die abzudichtende Fläche eines abzudichtenden Maschinenelements anliegend. Der Dichtring umschließt die abzudichtende Fläche unter elastischer Vorspannung. Es ist vorgesehen, dass der Dichtring und der Filterring, jeweils bezogen auf die abzudichtende Fläche, jeweils eine Überdeckung aufweisen, wobei die Überdeckung des Filterrings ≤ 1 mm ist, bezogen auf die abzudichtende Fläche.

Der Dichtring kann zum Beispiel als Radialwellendichtring ausgebildet sein und eine dynamisch beanspruchte Dichtlippe aufweisen, die axial in Richtung des abzudichtenden Raums vorgewölbt ist. Je nach Anwendungsfall kann die Dichtlippe durch eine Ringwendelfeder, die die Dichtlippe radial außenumfangsseitig umschließt, an die abzudichtende Fläche dichtend angedrückt werden. Generell besteht jedoch auch die Möglichkeit, dass die Dichtlippe die abzudichtende Fläche ohne Hilfsmittel, wie zum Beispiel die Ringwendelfeder, unter werkstoffbedingter elastischer Vorspannung dichtend umschließt.

Der Filterring aus Filtervlies ist bevorzugt entsprechend dem Dichtring ebenfalls axial in Richtung des abzudichtenden Raums vorgewölbt, wobei die Überdeckung des Filterrings nur so gering ist, um eine umfangsseitige Berührung der abzudichtenden Fläche sicher zu stellen. Durch die geringe Überdeckung des Filterrings ist auch die Reibleistung sehr gering und dadurch auch die unerwünschte Entstehung von Wärme.

Der Filterring und der Stützkörper können miteinander verklebt und/oder verklemmt sein.

Nach einer anderen Ausgestaltung können der Filterring und der Dichtring miteinander verklebt sein.

Das Filtervlies des Filterrings ist bevorzugt laminiert. Dadurch wird eine bessere Bindung des Filtervlieses erreicht, und der Ausriss von Fasern während der bestimmungsgemäßen Verwendung der Dichtungsanordnung wird minimiert. Das ist insofern wichtig, als ein Ausriss von Fasern den Dichtmechanismus des Dichtrings gefährden könnte, weil zum Beispiel eine Rückfördereinrichtung des Dichtrings, die gegebenenfalls vorgesehen sein kann, um abzudichtendes Medium in Richtung des abzudichtenden Raums zurückzufördern, durch ausgerissene Fasern außer Funktion gesetzt werden kann.

Eine besonders gute Bindung des Filtervlieses wird bevorzugt durch eine NBR-Laminierung erreicht.

Das Schmiermittel kann durch ein Schmieröl gebildet sein.

Die zuvor beschriebene Dichtungsanordnung kann in Getrieben oder Achsen von Nutzfahrzeugen Verwendung finden, insbesondere in Getrieben oder Achsen von schnellen Kleintransportern. Durch die im Vergleich zu Personenkraftwagen deutlich größeren Abmessungen der Dichtungsanordnung bei ungefähr gleichen Drehzahlen, werden an Dichtungsanordnungen für derartige Verwendungen besonders hohe Anforderungen an die Funktion und die Haltbarkeit gestellt. Das Schmieröl ist häufig stärker verunreinigt. Der Dichtring wird durch den in Richtung des abzudichtenden Raums vorgeschalteten Filterring besonders zuverlässig geschützt.

Die Dichtungsanordnung kann auch im stationären Getrieben zur Anwendung gelangen.

### Kurzbeschreibung der Zeichnung

Drei Ausführungsbeispiele einer Dichtungsanordnung werden nachfolgend näher beschrieben.

Diese zeigen jeweils in schematischer Darstellung:
- Fig. 1: ein erstes Ausführungsbeispiel, bei dem der Dichtring und der Filterring die weitere Einheit bilden,
- Fig. 2: ein zweites Ausführungsbeispiel, das sich vom Ausführungsbeispiel aus Fig. 1 dadurch unterscheidet, dass die beiden vormontierbaren Einheiten innerhalb des Einbauraums getrennt verbaut sind,
- Fig. 3: ein drittes Ausführungsbeispiel, bei dem der Filterring an einem elastomeren Werkstoffüberzug des Stützrings des Dichtrings festgelegt ist.

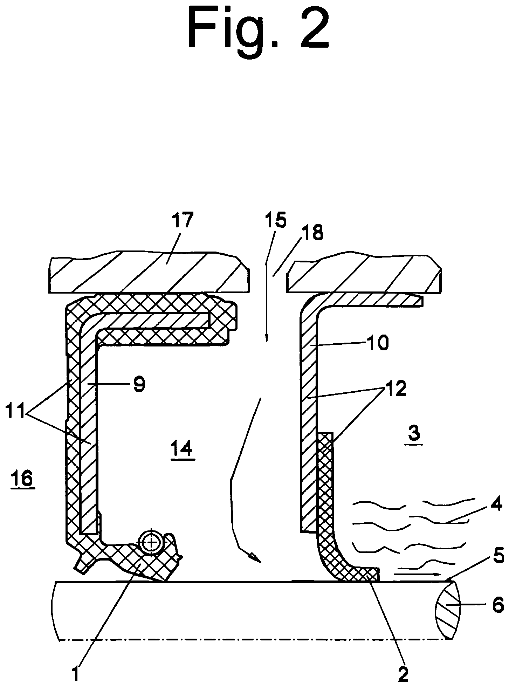

Nur das zweite Ausführungsbeispiel gemäß Figur 2 ist erfindungsgemäß.

### Ausführung der Erfindung

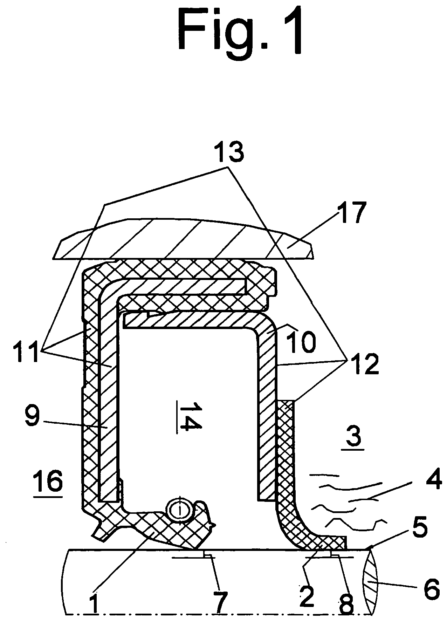

In den Fig. 1 bis 3 ist jeweils eine Dichtungsanordnung gezeigt, die einen Dichtring 1 und einen Filterring 2 umfasst, wobei der Filterring 2 aus einem Filtervlies besteht. Der Filterring 2 ist dem Dichtring 1 auf der dem abzudichtenden Raum 3 zugewandten Seite mit axialem Abstand benachbart zugeordnet, wobei der abzudichtende Raum 3 in den hier gezeigten Ausführungsbeispielen in einem Getriebe oder in einer Achse eines Kraftfahrzeugs angeordnet ist. Innerhalb des abzudichtenden Raums 3 ist ein Schmiermittel 4, beispielsweise ein Schmieröl, angeordnet, das gegenüber der Umgebung 16 abgedichtet wird. Das abzudichtende Maschinenelement 6 ist in den hier gezeigten Ausführungsbeispielen eine Achse oder eine Welle, wobei sowohl der Dichtring 1 als auch der Filterring 2 die abzudichtende Fläche 5 des abzudichtenden Maschinenelements 6 anliegend umschließen.
Bezogen auf die abzudichtende Fläche 5 weisen sowohl der Dichtring 1 als auch der Filterring 2 jeweils eine Überdeckung 7, 8 auf, wobei die Überdeckung 8 des Filterrings 2 nur sehr gering ist, ≤ 1 mm bezogen auf die abzudichtende Fläche 5. Durch diese geringe Überdeckung 8 wird sicher gestellt, dass der Filterring 2 die abzudichtende Fläche 5, in Umfangsrichtung betrachtet, einerseits durchgängig berührt, ohne dass es andererseits zu einer unerwünscht großen Wärmeentwicklung durch Reibung kommt.

In Fig. 1 ist ein erstes Ausführungsbeispiel einer Dichtungsanordnung gezeigt. Der Dichtring 1 ist mit dem Stützkörper 9, der Filterring 2 mit dem Stützkörper 10 verbunden, wobei die beiden Stützkörper 9, 10 jeweils aus einem Blech bestehen. Die vormontierbare Einheit 11 wird durch den Dichtring 1 und den entsprechenden Stützkörper 9, die vormontierbare Einheit 12 durch den Filterring 2 und den entsprechenden Stützkörper 10 gebildet, wobei diese vormontierbaren Einheiten 11, 12 in Fig. 1 zu der weiteren Einheit 13 zusammengefasst sind. Der axiale Abstand zwischen dem Dichtring 1 und dem Filterring 2 ist dadurch vorgegeben und stets konstant.

In Fig. 2 ist ein zweites Ausführungsbeispiel gezeigt, das erfindungsgemäß ist und das sich vom zuvor beschriebenen Ausführungsbeispiel gemäß Fig. 1 dadurch unterscheidet, dass die vormontierbaren Einheiten 11, 12 getrennt voneinander und mit axialem Abstand zueinander benachbart im Einbauraum 14 angeordnet sind. Innerhalb des Gehäuses 17 ist im Bereich des axialen Abstands zwischen den Einheiten 11, 12 eine Durchbrechung 18 vorgesehen, durch die Frischöl in den Einbauraum 14 eingespeist werden kann. Das Frischöl kann sauber oder zum Beispiel durch einen Ölfilter gereinigt worden sein. Das Frischöl gelangt dann durch die Durchbrechung 18 hindurch in den Einbauraum 14 und von dort zwischen der abzudichtenden Fläche 5 und dem Filterring 2 hindurch in den abzudichtenden Raum 3.

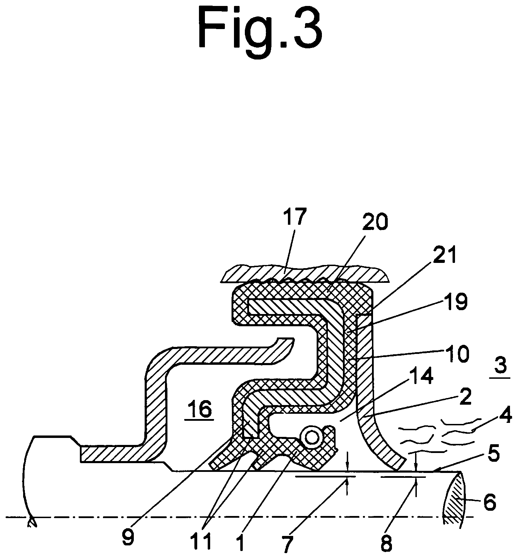

In Fig. 3 ist ein drittes Ausführungsbeispiel gezeigt, ähnlich dem Ausführungsbeispiel aus Fig. 1, wobei der Stützkörper 9 des Dichtrings 1 mit einer Elastomerschicht 19 überzogen ist, die auch die statische Dichtung 20 gegenüber dem Gehäuse 17 bildet. Auf der dem abzudichtenden Raum 3 axial zugewandten Seite der Elastomerschicht 19 ist eine Ausnehmung 21 vorgesehen, in der der Filterring 2 aus Filtervlies angeordnet ist; der Filterring 2 und der Dichtring 1 sind miteinander verklebt.

In allen drei Ausführungsbeispielen sorgt der aus Filtervlies bestehende Filterring 2 dafür, dass Verunreinigungen, die sich im abzudichtenden Schmiermittel 4 innerhalb des abzudichtenden Raums 3 befinden, nicht zum Dichtring 1 gelangen. Der Dichtring 1 weist dadurch nur einen sehr geringen Verschleiß und daraus resultierend gleichbleibend gute Gebrauchseigenschaften während einer langen Gebrauchsdauer auf.

### Bezugszeichenliste:

- 1: Dichtring
- 2: Filterring
- 3: abzudichtender Raum
- 4: Schmiermittel
- 5: abzudichtende Fläche
- 6: abzudichtendes Maschinenelement
- 7: Überdeckung des Dichtrings
- 8: Überdeckung des Filterrings
- 9: Stützkörper des Dichtrings
- 10: Stützkörper des Filterrings
- 11: erste vormontierbare Einheit aus Dichtring 1 und Stützkörper 9
- 12: zweite vormontierbare Einheit aus Filterring 2 und Stützkörper 10
- 13: weitere Einheit (11 und 12)
- 14: Einbauraum
- 15: Zuleitung
- 16: Umgebung
- 17: Gehäuse
- 18: Durchbrechung
- 19: Elastomerschicht
- 20: statische Dichtung
- 21: Ausnehmung

## Patentansprüche

1. Dichtungsanordnung, umfassend ein abzudichtendes Maschinenelement (6), ein Gehäuse (17), das einen abzudichtenden Raum (3) begrenzt, ein abzudichtendes Medium, einen Dichtring (1) und einen Filterring (2) aus Filtervlies, der dem Dichtring (1) auf der dem abzudichtenden Raum (3) zugewandten Seite mit axialem Abstand benachbart zugeordnet ist, wobei der Dichtring (1) und der Filterring (2) die abzudichtende Fläche (5) des abzudichtenden Maschinenelements (6) anliegend umschließen, wobei das abzudichtende Medium ein Schmiermittel (4) ist und wobei der abzudichtende Raum (3) zumindest teilweise mit dem Schmiermittel (4) gefüllt ist, **dadurch gekennzeichnet, dass** der Filterring (2), bezogen auf die abzudichtende Fläche (5), eine Überdeckung (8) ≤ 1 mm aufweist, dass der Dichtring (1) und der Filterring (2) jeweils an einem Stützkörper (9, 10) festgelegt sind und mit den zugehörigen Stützkörpern (9, 10) jeweils eine vormontierbare Einheit (11, 12) bilden, dass die vormontierbaren Einheiten (11, 12) mit axialem Abstand zueinander benachbart im Einbauraum (14) angeordnet sind und dass in dem Einbauraum (14) axial zwischen den vormontierbaren Einheiten (11, 12) eine Zuleitung (15) für Frischöl angeordnet ist.

2. Dichtungsanordnung nach Anspruch 1, **dadurch gekennzeichnet, dass** die Zuleitung (15) und der abzudichtende Raum (3) durch den Filterring (2) räumlich voneinander getrennt sind und dass der Filterring (2) als Rückschlagventil ausgebildet und vom Frischöl in den abzudichtenden Raum (3) umströmbar ist.

3. Dichtungsanordnung nach einem der Ansprüche 1 oder 2, **dadurch gekennzeichnet, dass** der Dichtring (1), bezogen auf die abzudichtende Fläche (5), eine Überdeckung (7) aufweist.

4. Dichtungsanordnung nach einem der Ansprüche 1 bis 3, **dadurch gekennzeichnet, dass** der Filterring (2) und der Stützkörper (10) miteinander verklebt und/oder verklemmt sind.

5. Dichtungsanordnung nach einem der Ansprüche 1 bis 4, **dadurch gekennzeichnet, dass** das Filtervlies des Filterrings (2) laminiert ist.

6. Dichtungsanordnung nach einem der Ansprüche 1 bis 5, **dadurch gekennzeichnet, dass** das Schmiermittel (4) durch ein Schmieröl gebildet ist.

7. Verwendung einer Dichtungsanordnung nach einem der Ansprüche 1 bis 6 in einem Getriebe oder in einer Achse eines Nutzfahrzeugs.

## Claims

1. Seal arrangement, comprising a machine element (6) to be sealed, a housing (17) which delimits a space (3) to be sealed, a medium to be sealed, a sealing ring (1) and a filter ring (2) which is made from filter fleece and is assigned to the sealing ring (1) adjacently at an axial spacing on the side which faces the space (3) to be sealed, the sealing ring (1) and the filter ring (2) enclosing the face (5) to be sealed of the machine element (6) to be sealed in a bearing manner, the medium to be sealed being a lubricant (4), and the space (3) to be sealed being filled at least partially with the lubricant (4), **characterized in that** the filter ring (2) has an overlap (8) of ≤ 1 mm in relation to the face (5) to be sealed, **in that** the sealing ring (1) and the filter ring (2) are fixed in each case on a supporting body (9, 10) and in each case form a unit (11, 12) which can be preassembled with the associated supporting bodies (9, 10), **in that** the units (11, 12) which can be preassembled are arranged adjacently in the installation space (14) at an axial sopacing in relation to one another, and **in that** a feed line (15) for fresh oil is arranged in the installation space (14) axially between the units (11, 12) which can be preassembled.

2. Seal arrangement according to Claim 1, **characterized in that** the feed line (15) and the space (3) to be sealed are separated spatially from one another by way of the filter ring (2), and **in that** the filter ring (2) is configured as a check valve and can be flowed around by the fresh oil into the space (3) to be sealed.

3. Seal arrangement according to either of Claims 1 and 2, **characterized in that** the sealing ring (1) has an overlap (7) in relation to the face (5) to be sealed.

4. Seal arrangement according to one of Claims 1 to 3, **characterized in that** the filter ring (2) and the supporting body (10) are adhesively bonded and/or clamped to one another.

5. Seal arrangement according to one of Claims 1 to 4, **characterized in that** the filter fleece of the filter ring (2) is laminated.

6. Seal arrangement according to one of Claims 1 to 5, **characterized in that** the lubricant (4) is formed by way of a lubricating oil.

7. Use of a seal arrangement according to one of Claims 1 to 6 in a transmission or in an axle of a commercial vehicle.

## Revendications

1. Agencement d'étanchéité, comprenant un élément de machine à rendre étanche (6), un boîtier (17), qui limite un espace à étanchéifier (3), un milieu à étanchéifier, un anneau d'étanchéité (1) et un anneau de filtre (2) en non-tissé filtrant, qui est associé à distance axiale à proximité de l'anneau d'étanchéité (1) sur le côté tourné vers l'espace à étanchéifier (3), dans lequel l'anneau d'étanchéité (1) et l'anneau de filtre (2) entourent en s'y appliquant la face à étanchéifier (5) de l'élément de machine à rendre étanche (6), dans lequel le milieu à étanchéifier est un lubrifiant (4) et dans lequel l'espace à étanchéifier (3) est rempli au moins en partie par le lubrifiant (4), **caractérisé en ce que** l'anneau de filtre (2), rapporté à la face à étanchéifier (5), présente un recouvrement (8) ≤ 1 mm, **en ce que** l'anneau d'étanchéité (1) et l'anneau de filtre (2) sont fixés respectivement à un corps de soutien (9, 10) et forment avec les corps de soutien correspondants (9, 10) chaque fois une unité pouvant être préassemblée (11, 12), **en ce que** les unités pouvant être préassemblées (11, 12) sont disposées à proximité l'une de l'autre à une distance axiale dans la chambre de montage (14) et **en ce qu'**une conduite d'alimentation (15) pour de l'huile fraîche est disposée dans la chambre de montage (14) axialement entre les unités pouvant être préassemblées (11, 12).

2. Agencement d'étanchéité selon la revendication 1, **caractérisé en ce que** la conduite d'alimentation (15) et l'espace à étanchéifier (3) sont spatialement séparés l'un de l'autre par l'anneau de filtre (2) et **en ce que** l'anneau de filtre (2) est formé comme un clapet antiretour et peut être balayé par l'huile fraîche dans l'espace à étanchéifier (3).

3. Agencement d'étanchéité selon une des revendications 1 ou 2, **caractérisé en ce que** l'anneau d'étanchéité (1), rapporté à la face à étanchéifier (5), présente un recouvrement (7).

4. Agencement d'étanchéité selon l'une quelconque des revendications 1 à 3, **caractérisé en ce que** l'anneau de filtre (2) et le corps de soutien (10) sont collés et/ou serrés l'un sur l'autre.

5. Agencement d'étanchéité selon l'une quelconque des revendications 1 à 4, **caractérisé en ce que** le non-tissé filtrant de l'anneau de filtre (2) est stratifié.

6. Agencement d'étanchéité selon l'une quelconque des revendications 1 à 5, **caractérisé en ce que** le lubrifiant (4) est formé par une huile lubrifiante.

7. Utilisation d'un agencement d'étanchéité selon l'une quelconque des revendications 1 à 6 dans une boîte de vitesses ou dans un essieu d'un véhicule utilitaire.
